# EUROPEAN PATENT SPECIFICATION

(11) **EP 3 741 503 B1**
(45) Date of publication and mention of the grant of the patent: **17.01.2024**
(21) Application number: 20174486.9
(22) Date of filing: 13.05.2020
(51) Int. Cl.: B23Q 1/70, B23B 31/26

(54) **TOOL SPINDLE STRUCTURE**
WERKZEUGSPINDELSTRUKTUR
STRUCTURE DE BROCHE D'OUTIL

(30) Priority: 23.05.2019 JP 2019096496
(43) Date of publication of application: 25.11.2020
(73) Proprietor: Nakamura-Tome Precision Industry Co., Ltd., Ishikawa 920-2195 (JP)
(72) Inventor: TADA, Hiroyuki, Hakusan, Ishikawa 920-2195 (JP); KAMIGAWARA, Atsushi, Hakusan, Ishikawa 920-2195 (JP)
(74) Representative: Wunderlich & Heim Patentanwälte Partnerschaftsgesellschaft mbB

(56) References cited:
- EP-A1- 0 262 368
- EP-A1- 1 920 880
- WO-A1-2005/120770
- WO-A1-2018/079650

## Description

The present invention relates to a tool spindle structure that enables a rotary tool to be mounted in machining with the rotary tool such as a drill, a milling cutter, or an end mill.

In machining a workpiece with a rotary tool, a variety of tools such a drill, a milling cutter, and an end mill are usable.

A tool spindle structure that enables such a tool to be replaceably mounted is known from, for example, JP-A-2017-24125.

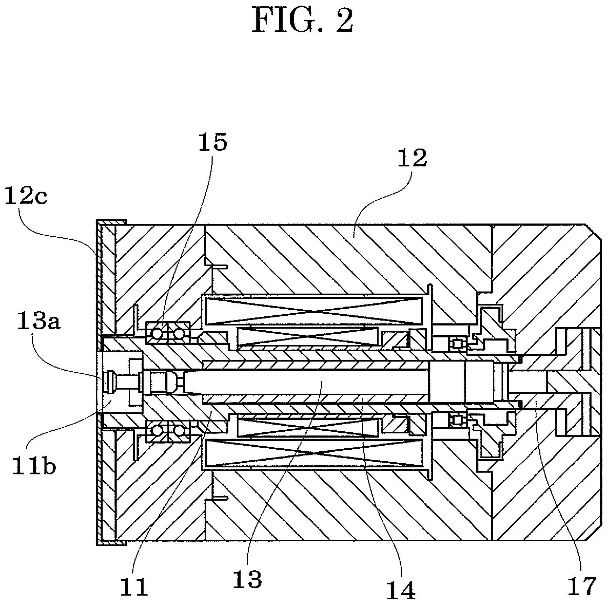

For example, a built-in motor and a tool spindle 11, a rotation of which is controlled by the built-in motor, are typically located in a housing 12 as illustrated in FIG. 2.

An axial center of the tool spindle 11 is a through hole and a clamp rod (also referred to as a pull rod or the like) 13 is inserted in the through hole.

A distal end portion of the tool spindle 11 has a mount hole 11b to mount a shank of a tool, and the tool is clamped by pulling the tool with a lock piece 13a that locks the mounted shank at a distal end side of the clamp rod.

That is, a clamp spring 14 applies a biasing force to the clamp rod 13 in a pulling direction (also referred to as a retracting direction or a clamping direction).

The tool is unclamped by pushing out the clamp rod 13 from behind a rear end side thereof with an unclamp rod 17 such as a piston.

A thrust force of the unclamp rod 17 in a pushing direction (also referred to as an advancing direction or an unclamping direction) is typically received only by a bearing (angular bearing) 15 between the tool spindle 11 and the housing 12.

Such a structure, however, requires making a thrust force for the clamp rod 13 in the unclamping direction equal to or less than an axial load acceptable to the angular bearing, thus imposing considerable restrictions on design.

JP-A-63-52947 discloses a tool spindle structure where a tool spindle facing downward is rotatably borne via a bearing and an anti-drop body is attached to prevent the tool spindle from dropping.

Meanwhile, in the tool spindle structure disclosed in this publication, a clamper is opened right and left to unlock the tool by pressing a drawbar downward. That is, a force is not applied to the bearing in an axial direction by pressing the drawbar downward.

Therefore, the anti-drop body disclosed in this publication is merely for preventing free fall of the spindle (tool spindle).

EP 1 920 880 A1, WO2018/079650A1 show further prior art tool spindle structures in which a thrust force from a clamp rod is borne by the spindle bearing. These arrangements transmit a substantial load into the bearing of the tool spindle structure. EP 0 262 368A1 shows a spindle structure with a stopper member in a vertical spindle configuration where no load is applied to the bearing by a clamp rod.

WO 2005/120770 A1 shows a tool spindle structure according to the preamble of claim 1.

An object of the invention is to provide a tool spindle structure with a high flexibility in design of an unclamping mechanism for a tool in a tool spindle.

In accordance with the invention, there is provided a tool spindle structure comprising the features of claim 1.

In the tool spindle structure according to the invention, the thrust force for the clamp rod in a pushing direction for unclamping a tool is also shared by the bearing. This is because the thrust force for the clamp rod is transferred through the biasing member and the tool spindle to the bearing. Here, the bearing includes an outer wheel fixed to the housing, an inner wheel fixed to the tool spindle, a rolling body therebetween.

According to the embodiment, an axial displacement of the tool spindle is acceptable. For this reason, unlike the conventional structure, the thrust force for the clamp rod in the pushing direction for unclamping the tool is not received only by the bearing. This is because in a case where a predetermined or larger displacement is to be added to the inner wheel of the bearing, displacement of the tool spindle fixed to the inner wheel is restricted by the stopper member to prevent a further displacement of the inner wheel. That is, the thrust force for the clamp rod in the pushing direction for unclamping the tool can be shared by the bearing and the stopper member. This enhances flexibility in design of an unclamping mechanism for a tool in the tool spindle.

In accordance with the invention, the stopper member (16) is fixed to the housing, and a predetermined clearance (δ) is defined between the stopper member (15) and the tool spindle (11).

The predetermined clearance (δ) defined between the stopper member and the tool spindle accepts displacement of the tool spindle in an axial direction thereof and, further, makes it possible to prevent resistance in a rotation direction from being applied to the tool spindle. In unclamping the tool, the tool spindle is brought into a quiescent state. For this reason, when a thrust force in an unclamping direction is applied to the clamp rod, the tool spindle comes into contact with the stopper member to restrain a further displacement of the tool spindle.

In accordance with one of some embodiments, there is provided the tool spindle structure, wherein the bearing (15) may include an angular bearing and the clearance (δ) is set such that the axial load to be received by the angular bearing falls within an acceptable range.

The angular bearing has a predetermined contact angle in an inner circumferential surface where the rolling body is to roll and a received load is divided into a radial load and an axial load. Although an axial displacement increases with an increase in the axial load, a so-called load-displacement curve similar to a spring constant is drawn.

Thus, in a case where a predetermined or larger displacement is to be added to the angular bearing, the structure with the stopper member allows the thrust force in the unclamping direction to be received by the stopper member to prevent a further displacement of the angular bearing. This enhances flexibility in an option of employing the angular bearing and flexibility in design of specifications, etc. of a clamp spring (biasing member) or unclamping means such as a cylinder.

In accordance with the invention, the tool spindle (11) includes a cylindrical portion (11a) at the distal end portion of the tool spindle (11), the cylindrical portion (11a) having a mount hole (11b) where the tool is to be mounted, and the clearance (δ) is defined between the stopper member (15) and an endmost surface of the cylindrical portion (11a).

This allows for protecting the bearing by bringing the cylindrical portion for defining the mount hole, in which the tool is to be mounted at the distal end portion of the tool spindle, into contact with the stopper.

In accordance with one of some embodiments, there is provided the tool spindle structure, wherein
the housing (12) may include a bearing housing (12a) in which the angular bearing (15) and the cylindrical portion (11a) of the tool spindle (11) are located,
the bearing housing (12a) may have an exterior surface (12a1) orthogonal to the axial direction, and
the stopper member (16) may be fixed to the exterior surface (12a1) of the bearing housing (12a).

This makes it possible to easily attach the stopper member. After the attachment of the stopper member, the exterior surface of the bearing housing and the stopper member may be covered with a cover.

In accordance with one of some embodiments, there is provided the tool spindle structure, wherein the stopper member (16) may be formed in a ring shape with a hole where the tool is to be inserted.

By forming the stopper member in the ring shape, it is possible to exhibit a mechanical strength enough for a stopper and, further, avoid interference with the tool.

### BRIEF DESCRIPTION OF THE DRAWINGS

FIG. 1A to FIG. 1C each schematically illustrate a tool spindle structure according to the embodiment of the invention; and
FIG. 2 schematically illustrates a conventional tool spindle structure.

### DESCRIPTION OF EXEMPLARY EMBODIMENTS

The following disclosure provides many different embodiments, or examples, for implementing different features of the provided subject matter. These are, of course, merely examples and are not intended to be limiting. In addition, the disclosure may repeat reference numerals and/or letters in the various examples. This repetition is for the purpose of simplicity and clarity and does not in itself dictate a relationship between the various embodiments and/or configurations discussed. Further, when a first element is described as being "connected" or "coupled" to a second element, such description includes embodiments in which the first and second elements are directly connected or coupled to each other, and also includes embodiments in which the first and second elements are indirectly connected or coupled to each other with one or more other intervening elements in between.

Exemplary embodiments are described below. Note that the following exemplary embodiments do not in any way limit the scope of the content defined by the claims laid out herein. Note also that all of the elements described in the present embodiment should not necessarily be taken as essential elements.

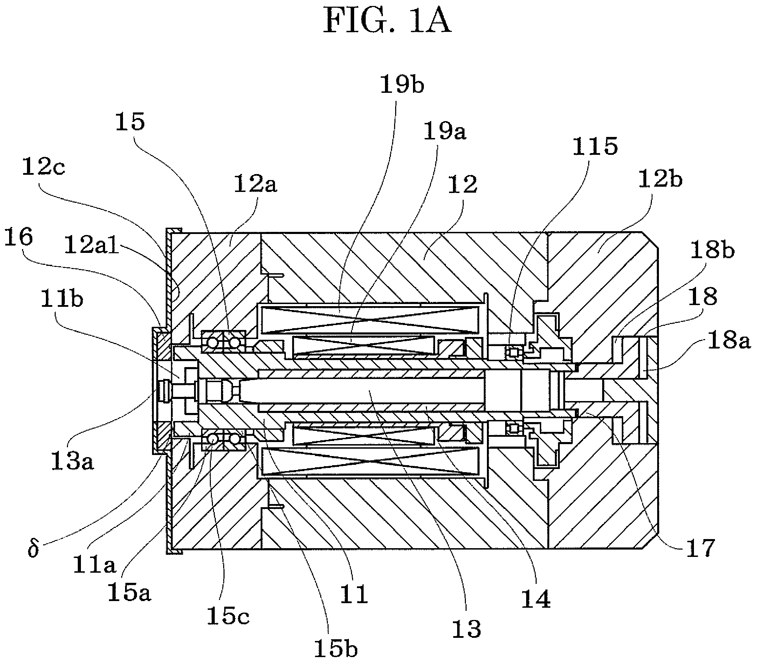

FIG. 1A of a tool spindle structure according to an exemplary embodiment of the invention schematically illustrates components to make clear a difference from FIG. 2, that is, a conventional structure.

A built-in motor and a tool spindle 11, a rotation of which is controlled by the built-in motor, are located inside a housing 12.

The structure illustrated in FIG. 1A is a divided structure including the housing 12 in which the motor is mounted, a bearing housing 12a fixed at a front side of the housing 12, and a cylinder housing 12b fixed at a rear side of the housing 12. It should be noted that a housing structure is by no means limited.

The tool spindle 11 is rotatably borne by a front bearing 15 and a rear bearing 115.

The front bearing 15 is an angular bearing, for example. The angular bearing 15 includes an outer wheel 15a fixed to the bearing housing 12a, an inner wheel 15b fixed to the tool spindle 11, and a rolling body 15c located between the outer wheel 15a and the inner wheel 15b.

A motor unit includes a rotator 19a fixed to the tool spindle 11 and a stator 19b fixed to the housing 12.

An axial center of the tool spindle 11 is a through hole and a clamp rod 13 is inserted in the through hole.

The clamp rod 13 is biased in a pulling direction (clamping direction) by a clamp spring (biasing member) 14 such as a plate spring. The clamp spring 14 may include a plurality of disc springs layered in a long and narrow cylindrical space defined between the tool spindle 11 and the clamp rod 13, for example. This causes the clamp rod 13 to be biased in the pulling direction (clamping direction) with respect to the tool spindle 11.

The tool spindle 11 has a cylindrical portion (also referred to as an end portion) 11a at a distal end portion thereof, for example. An inside of the cylindrical portion 11a provides a mount hole (fitting hole) 11b in which a shank of a tool is to be fitted and mounted. A lock piece 13a provided at a distal end of the clamp rod 13 is located facing the mount hole 11b. The tool is clamped in the mount hole 11b by a force of the lock piece 13a for locking the tool in the pulling direction (clamping direction). The tool is thus fixed to the tool spindle 11. The tool then integrally rotates with the tool spindle 11 being rotated by the motor unit to machine a workpiece.

To replace the tool, the tool spindle 11 is brought into a quiescent state by stopping the rotation thereof. Subsequently, a rear end portion of the clamp rod 13 is pushed with an unclamp rod 17, applying an unclamping thrust force to the clamp rod 13 in a direction for the clamp rod 13 to be pushed out. This causes the shank of the tool to be pushed out of the mount hole 11b, unfixing the tool from the tool spindle 11.

This embodiment includes unclamping means such as a cylinder mechanism, for example. In the unclamping means, fluid chambers 18a and 18b provided in a cylinder 18 at both sides of the unclamp rod (piston) 17 are hydraulically controlled, thereby controlling advance and retraction of the unclamp rod 17. As the unclamp rod 17 advances, the unclamping thrust force in the direction for the clamp rod 13 to be pushed out is applied to the clamp rod 13.

When the tool spindle 11 is rotating, the unclamp rod 17 is retracted so as not to interfere with the clamp rod 13 with a predetermined gap between the clamp rod 13 and the unclamp rod 17.

To unclamp the tool, the rotation of the tool spindle 11 is stopped and the unclamp rod 17 is advanced in the quiescent state, thereby applying the unclamping thrust force to push the clamp rod 13 forward.

This causes the lock piece 13a to advance along with the clamp rod 13, bringing the tool into an unclamped state.

At this time, the unclamping thrust force is transferred to the clamp rod 13 and the clamp spring 14 and also to the bearing 15 through the tool spindle 11.

Thus, the inner wheel 15b of the angular bearing 15 that receives an axial load is displaced forward in an axial direction. This causes the tool spindle 11, to which the inner wheel 15b is fixed, to be displaced forward in the axial direction.

In the embodiment, a stopper member 16 is provided at a position facing the cylindrical portion 11a provided at the distal end portion of the tool spindle 11 as illustrated in FIG. 1A, for example. The stopper member 16 is formed in a ring shape to receive the tool therein, thereby being able to exhibit a predetermined mechanical strength. The stopper member 16 is fixed to an exterior surface 12a1 of the bearing housing 12a orthogonal to the axial direction of the tool spindle 11. After the attachment of the stopper member 16, the exterior surface 12a1 of the bearing housing 12a and the stopper member 16 are covered with a cover 12c provided with an insertion hole for the tool.

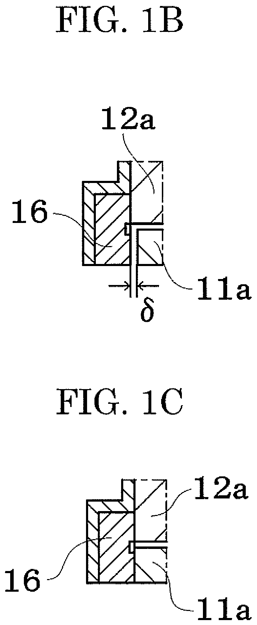

When the tool spindle is rotating, a predetermined clearance (δ) is defined between an end surface of the end portion 11a of the tool spindle 11 and the stopper member 16 as illustrated in an enlarged view of FIG. 1B.

In unclamping, the axial load is applied to the bearing 15 and the tool spindle 11 is displaced by an amount corresponding to the clearance (δ), bringing the end portion 11a of the tool spindle 11 into contact with the stopper member 16 as illustrated in FIG. 1C to prevent a further displacement of the tool spindle 11. The bearing 15 is thus protected.

## Claims

1. A tool spindle structure comprising:
a housing (12, 12a, 12b);
a tool spindle (11) adapted to be rotatably supported by a bearing (15, 115) in the housing;
a clamp rod (13) inserted in a through hole of the tool spindle (11) and adapted to advance and retract along an axial direction of the tool spindle (11);
a biasing member (14) adapted to apply a biasing force for retracting the clamp rod (13) to the tool spindle (11); and
unclamping means (17, 18) adapted to apply a thrust force for advancing the clamp rod (13) against the biasing force to the clamp rod (13),
wherein:
the clamp rod (13) is retracted to fix a tool to the tool spindle (11), the tool being mounted at a distal end portion of the tool spindle (11), and the clamp rod (13) is advanced to unfix the tool from the tool spindle (11),
the tool spindle (11) is supported in the housing (12) such that displacement thereof is allowed along the axial direction; and
a stopper member (16) is adapted to restrict a displacement amount of the tool spindle (11) that is displaceable with an axial load applied to the bearing (15) by the advance of the clamp rod (13), wherein
the stopper member (16) is fixed to the housing, and
a predetermined clearance (δ) is defined between the stopper member (16) and the tool spindle (11)
**characterised in that**:
the tool spindle (11) includes a cylindrical portion (11a) at the distal end portion of the tool spindle (11), the cylindrical portion (11a) having a mount hole (11b) where the tool is to be mounted, and
the clearance (δ) is defined between the stopper member (16) and an endmost surface of the cylindrical portion (11a).

2. The tool spindle structure according to claim 1, wherein the bearing (15) includes an angular bearing and the clearance (δ) is set such that the axial load to be received by the angular bearing falls within an acceptable range.

3. The tool spindle structure according to claim 2, wherein
the housing (12) includes a bearing housing (12a) in which the angular bearing (15) and the cylindrical portion (11a) of the tool spindle (11) are located,
the bearing housing (12a) has an exterior surface (12a1) orthogonal to the axial direction, and
the stopper member (16) is fixed to the exterior surface (12a1) of the bearing housing (12a).

4. The tool spindle structure according to anyone of claims 1 to 3, wherein the stopper member (16) is formed in a ring shape with a hole where the tool is to be inserted.

## Patentansprüche

1. Werkzeugspindelanordnung, die aufweist:
ein Gehäuse (12, 12a, 12b);
eine Werkzeugspindel (11), die ausgebildet ist, um von einem Lager (15, 115) im Gehäuse drehbar getragen zu werden;
eine Klemmstange (13), die in ein Durchgangsloch der Werkzeugspindel (11) eingesetzt ist und die ausgebildet ist, um sie entlang einer Axialrichtung der Werkzeugspindel (11) vorzuschieben und zurückzuziehen;
ein Vorspannelement (14), das ausgebildet ist, um eine Vorspannkraft zum Zurückziehen der Klemmstange (13) zur Werkzeugspindel (11) aufzubringen; und
Freigabemittel (17, 18), die ausgebildet sind, um eine Schubkraft zum Vorschieben der Spannstange (13) entgegen der Vorspannkraft auf die Klemmstange (13) auszuüben,
wobei:
die Klemmstange (13) zurückgezogen wird, um ein Werkzeug an der Werkzeugspindel (11) zu fixieren, wobei das Werkzeug an einem entfernten Endabschnitt der Werkzeugspindel (11) befestigt ist und die Spannstange (13) vorgeschoben wird, um das Werkzeug von der Werkzeugspindel (11) freizugeben,
die Werkzeugspindel (11) im Gehäuse (12) gelagert ist, so dass eine Verschiebung dieser entlang der axialen Richtung gestattet ist; und
ein Anschlagelement (16), das ausgebildet ist, um einen Verschiebungsbetrag der Werkzeugspindel (11) zu begrenzen, die mit einer axialen Belastung verschiebbar ist, die auf das Lager (15) durch den Vorschub der Klemmstange (13) ausgeübt wird, wobei
das Anschlagelement (16) am Gehäuse befestigt ist, und
ein vorgegebener Freiraum (δ) zwischen dem Anschlagelement (16) und der Werkzeugspindel (11) festgelegt ist,
**dadurch gekennzeichnet, dass**:
die Werkzeugspindel (11) einen zylindrischen Abschnitt (11a) am entfernten Endabschnitt der Werkzeugspindel (11) aufweist, wobei der zylindrische Abschnitt (11a) ein Befestigungsloch (11b) hat, in dem das Werkzeug befestigt werden kann, und
der Freiraum (δ) zwischen dem Anschlagelement (16) und einer äußersten Oberfläche des zylindrischen Abschnitts (11a) festgelegt ist.

2. Werkzeugspindelanordnung nach Anspruch 1, wobei das Lager (15) ein Winkellager aufweist und der Freiraum (δ) so eingestellt ist, dass die vom Winkellager aufzunehmende Axiallast in einem akzeptablen Bereich liegt.

3. Werkzeugspindelanordnung nach Anspruch 2,
wobei
das Gehäuse (12) ein Lagergehäuse (12a) aufweist, in dem das Winkellager (15) und der zylindrische Abschnitt (11a) der Werkzeugspindel (11) angeordnet sind,
das Lagergehäuse (12a) eine Außenfläche (12a1) aufweist, die orthogonal zur axialen Richtung ist, und
das Anschlagelement (16) an der Außenfläche (12a1) des Lagergehäuses (12a) befestigt ist.

4. Die Werkzeugspindelanordnung nach einem der Ansprüche 1 bis 3, wobei das Anschlagelement (16) ringförmig mit einem Loch ausgebildet ist, in das das Werkzeug eingeführt werden soll.

## Revendications

1. Structure de broche d'outil comprenant :
un boîtier (12, 12a, 12b) ;
une broche d'outil (11) adaptée pour être supportée, de manière rotative, par un palier (15, 115) dans le boîtier ;
une tige de serrage (13) insérée dans un trou débouchant de la broche d'outil (11) et adaptée pour avancer et reculer le long d'une direction axiale de la broche d'outil (11) ;
un élément de sollicitation (14) adapté pour appliquer une force de sollicitation pour faire reculer la tige de serrage (13) vers la broche d'outil (11) ; et
des moyens de desserrage (17, 18) adaptés pour appliquer une force de poussée pour faire avancer la tige de serrage (13) contre la force de sollicitation, vers la tige de serrage (13),
dans laquelle :
la tige de serrage (13) recule pour fixer un outil sur la broche d'outil (11), l'outil étant monté au niveau d'une partie d'extrémité distale de la broche d'outil (11), et la tige de serrage (13) est avancée pour défixer l'outil de la broche d'outil (11),
la broche d'outil (11) est supportée dans le boîtier (12) de sorte que son déplacement est autorisé le long de la direction axiale ; et
un élément de butée (16) est adapté pour limiter une quantité de déplacement de la broche d'outil (11) qui est déplaçable avec une charge axiale appliquée sur le palier (15) par l'avancement de la tige de serrage (13), dans laquelle :
l'élément de butée (16) est fixé au boîtier, et
un jeu (δ) prédéterminé est défini entre l'élément de butée (16) et la broche d'outil (11), **caractérisée en ce que** :
la broche d'outil (11) comprend une partie cylindrique (11a) au niveau de la partie d'extrémité distale de la broche d'outil (11), la partie cylindrique (11a) ayant un trou de montage (11b) où l'outil doit être monté, et
le jeu (δ) est défini entre l'élément de butée (16) et la surface la plus à l'extrémité de la partie cylindrique (11a).

2. Structure de broche d'outil selon la revendication 1, dans laquelle le palier (15) comprend un palier angulaire et le jeu (δ) est réglé de sorte que la charge axiale destinée à être reçue par le palier angulaire tombe dans une plage acceptable.

3. Structure de broche d'outil selon la revendication 2, dans laquelle :
le boîtier (12) comprend un boîtier de palier (12a) dans lequel le palier angulaire (15) et la partie cylindrique (11a) de la broche d'outil (11) sont positionnés,
le boîtier de palier (12a) a une surface extérieure (12a1) orthogonale à la direction axiale, et
l'élément de butée (16) est fixé à la surface extérieure (12a1) du boîtier de palier (12a).

4. Structure de broche d'outil selon l'une quelconque des revendications 1 à 3, dans laquelle l'élément de palier (16) est formé selon une forme annulaire avec un trou où l'outil doit être inséré.
